# FASCICULE DE BREVET EUROPEEN

(11) **EP 2 519 047 B1**
(45) Date de publication et mention de la délivrance du brevet: **14.09.2016**
(21) Numéro de dépôt: 12165313.3
(22) Date de dépôt: 24.04.2012
(51) Int. Cl.: H04W 24/02

(54) **Procédé d'optimisation de la qualité d'un réseau cellulaire**
Verfahren zur Optimierung der Qualität eines Handynetzes
Method for optimising the quality of a cellular network

(30) Priorité: 29.04.2011 FR 1153706
(43) Date de publication de la demande: 31.10.2012
(73) Titulaire: InfoVista SAS, 91940 Les Ulis (FR)
(72) Inventeur: Lerbour, Régis, 92100 Boulogne-Billancourt (FR); Donnard, Grégory, Ottawa, Ontario K1R 0A2 (CA); Le Helloco, Yann, OTTAWA, Ontario K1V 9X1 (CA)
(74) Mandataire: Pontet Allano & Associes

(56) Documents cités:
- WO-A2-98/53621
- WO-A2-2004/073243
- US-A1- 2005 254 455
- US-B1- 6 829 491

## Description

### Arrière-plan de l'invention

La présente invention concerne un procédé et un dispositif pour améliorer la qualité d'un réseau de télécommunications cellulaire.

D'une façon générale, l'optimisation d'un réseau cellulaire consiste à estimer si la qualité globale du réseau, sous l'hypothèse de ces paramètres, répond à certains critères prédéterminés, et à faire varier les paramètres ou les critères pour tendre vers une performance optimisée.

Dans l'état actuel de la technique, les critères utilisés peuvent être classés parmi les critères de couverture, les critères d'interférence, les critères de capacité et les critères de non couverture.

Ces critères présentent l'inconvénient majeur de devoir être définis par rapport à des seuils de performance.

Par exemple, un critère de couverture n'a de sens qu'en association avec un niveau de champ minimum requis sur lequel l'optimisation peut se baser.

Ces seuils peuvent par être fixes et prédéfinis dans l'outil d'optimisation ou ajustables par l'utilisateur.

Par exemple, le document " Towards Automatic Cell Planning, R. Kapp Rawnsley and S. Hurley; Department of Computer Science, Cardiff University, Cardiff CF24 3XF" publié en 2000 sous le numéro 0-7803-6465-5/00, décrit un procédé d'optimisation dans lequel deux critères d'optimisation, associés à des seuils devant être définis par l'utilisateur, sont utilisés, à savoir :
- un critère de couverture défini par rapport à un seuil de rapport signal sur bruit fixé à 14dB ; et
- un critère de capacité défini par rapport à un seuil de trafic fixé à 43 Erlangs.

Le document « Methodology for WiMax Performance Optimization using drive test data » F. Alghamdi, I. Kostanic, The 8th International Conference on Computing, Communications Control Technologies, Orlando, Florida, April 6th-9th, 2010 propose une méthode d'optimisation d'un réseau cellulaire dans laquelle un seuil de couverture en niveau de champ est calculé automatiquement à partir de la largeur de bande et d'un facteur de bruit du récepteur.

Quoiqu'il en soit, la définition des seuils associés aux critères d'optimisation est délicate et difficile à optimiser, que ces seuils soient déterminés de façon empirique ou automatique.

Au surplus, les critères de performance basés sur de tels seuils minimum de performance ne garantissent pas la performance globale du réseau. Par exemple, si le niveau de champ minimum s'avère trop faible, car déjà atteint sur toute la couverture du réseau cellulaire, ou trop élevé car inatteignable, l'optimisation est sans effet.

L'invention vise par conséquent un procédé et un dispositif d'optimisation d'un réseau de télécommunications cellulaire dans lequel la définition d'un niveau de seuil n'est pas nécessaire.

Les documents US 2005/254455 A1, WO 98/53621 A2 et US 6 829 491 B1 décrivent autres exemples de l'art antérieur.

### Objet et résumé de l'invention

Ainsi, et selon un premier aspect, l'invention concerne un procédé d'optimisation de la qualité d'un réseau cellulaire. Ce procédé comporte au moins une itération, itération comportant :
- une étape d'estimation d'au moins un indicateur de performance locale en une pluralité de points du réseau, en fonction de paramètres du réseau ;
- une étape d'estimation d'un niveau de qualité globale du réseau pour ces paramètres, à partir de l'estimation d'un niveau de qualité locale en chacun desdits points, pour ces paramètres, les niveaux de qualités locales dépendant exclusivement des indicateurs de performances locales;
- les paramètres précités étant modifiés tant que le niveau de qualité globale peut être amélioré ; et
- une étape de mémorisation des paramètres correspondant au niveau de qualité globale optimal.

Corrélativement, l'invention concerne, un dispositif d'optimisation de la qualité d'un réseau cellulaire, ce dispositif comportant, des moyens pour mettre en oeuvre, de façon itérative, tant qu'un niveau de qualité globale du réseau, dépendant de paramètres du réseau, peut être amélioré :
- des moyens pour modifier ces paramètres ;
- des moyens d'estimation d'au moins un indicateur de performance locale en une pluralité de points du réseau, en fonction de paramètres du réseau ;
- des moyens d'estimation dudit niveau de qualité globale pour ces paramètres, à partir de l'estimation d'un niveau de qualité locale en chacun des points, pour ces paramètres, les niveaux de qualités locales dépendant exclusivement des indicateurs de performances locales ; et
- des moyens de mémorisation desdits paramètres correspondant audit niveau de qualité globale optimal.

Un « indicateur de performance », au sens de la présente demande, désigne toute donnée permettant de mesurer, d'estimer ou de représenter un niveau de performance du réseau. Un tel indicateur présente l'intérêt majeur de ne pas avoir besoin d'être quantifié, c'est-à-dire qu'il n'est pas nécessaire de définir un seuil (minimal ou maximal) attestant de la qualité du réseau.

Par exemple, la couverture du réseau ne constitue pas un indicateur de performance mais uniquement un indicateur de disponibilité. En effet, il se peut que le niveau de signal soit suffisant pour couvrir une zone donnée, mais que les niveaux d'interférence en cette zone soient trop important pour permettre une communication de qualité voire même l'établissement de la communication.

Les critères d'interférence, parfois utilisés en complément d'un critère de couverture ne constituent pas non plus des indicateurs de performance au sens du brevet.

En revanche, le débit ou l'efficacité spectrale (quantité d'information pouvant être transmise pendant un intervalle de temps et en utilisant une certaine largeur de bande fréquentielle) sont des indicateurs de performance au sens de l'invention.

D'une façon générale, l'invention permet ainsi d'optimiser un réseau de télécommunications cellulaire sans que l'utilisateur n'ait besoin de définir de seuils, autrement dit, d'objectif. En particulier, elle ne nécessite pas la définition de critère de couverture ou d'interférence.

Le procédé et le système d'optimisation selon l'invention sont donc excessivement simples à mettre en oeuvre par l'utilisateur.

Au surplus, et de façon très avantageuse, le résultat de l'optimisation, qui ne dépend plus de seuils éventuellement erronées ou inadaptés est optimal en toutes circonstances.

Ce résultat présente aussi l'avantage d'être directement lié à la perception de la qualité du réseau par les usagers.

L'invention permet en outre la prise en compte des gains dûs à l'utilisation d'antennes multiples ce qu'aucun procédé connu de l'art antérieur ne permet de faire.

Dans un mode particulier de réalisation, les différentes étapes du procédé d'optimisation sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes du procédé d'optimisation tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous en référence aux dessins qui en illustrent un exemple de réalisation dépourvu de tout caractère limitatif. Sur les figures :
- la figure 1 représente un réseau pouvant être optimisé par la mise en oeuvre de l'invention ;
- la figure 2 représente de façon schématique un dispositif d'optimisation conforme à un mode particulier de réalisation de l'invention.
- la figure 3 représente sous forme d'organigramme les principales étapes d'un procédé d'optimisation conforme à un mode particulier de réalisation de l'invention.

### Description détaillée de l'invention

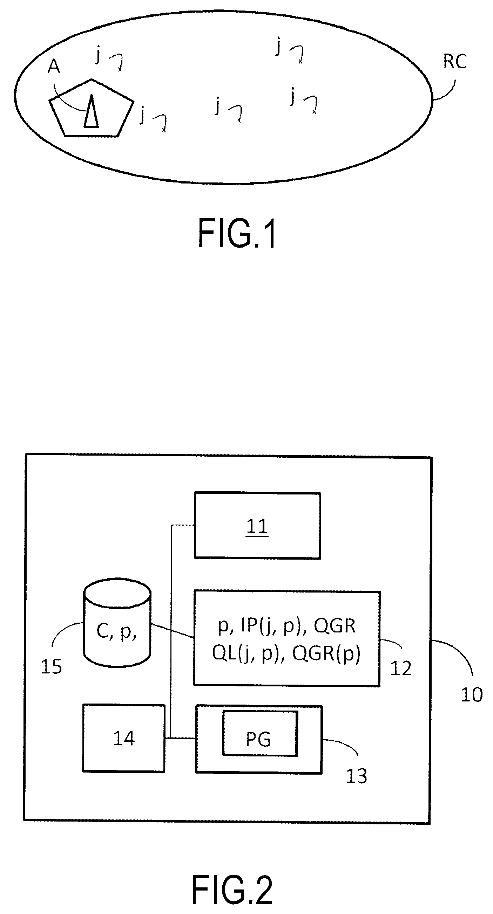

La figure 1 représente un réseau de télécommunications cellulaire RC dans lequel l'invention peut être mise en oeuvre. Par souci de lisibilité, seule une cellule, délimitée par la portée d'une antenne A est représentée.

Sur cette figure, nous avons représenté un certain nombre de points j constituant un maillage de ce réseau.

La figure 2 représente un dispositif 10 d'optimisation du réseau cellulaire RC. Ce dispositif à l'architecture matérielle d'un ordinateur conventionnel. Il comporte un processeur 11, une mémoire vive de type RAM 12, une mémoire morte de type ROM 13, un interface utilisateur 14 et une mémoire non volatile 15 constituant base de données.

Dans l'exemple de réalisation décrit ici, la base de données comporte une cartographie C du réseau RC permettant de définir les points j.

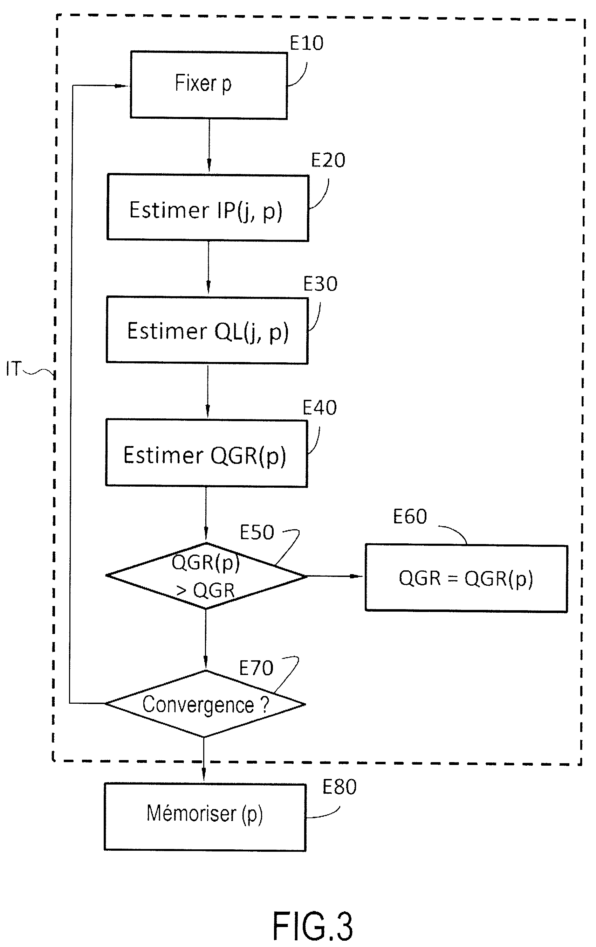

La mémoire morte de type ROM 13 constitue un support d'enregistrement au sens de l'invention. Ce support d'enregistrement est lisible par le processeur 11 et comporte un programme d'ordinateur PG comprenant des instructions pour l'exécution des étapes d'un procédé d'optimisation selon l'invention qui va maintenant être décrit en référence à la figure 3.

Ce procédé est susceptible de comporter plusieurs itérations IT, constituées par les étapes E10 à E70.

Au cours d'une étape E10, on fixe des paramètres p du réseau RC. Ces paramètres peuvent notamment être constitués par le nombre, la position et l'orientation des antennes A Dans l'exemple de réalisation décrit ici, la configuration de chaque antenne est représentée par son orientation dans le plan horizontal (azimuth) et dans le plan vertical (tilt), ainsi que par ses propriétés pouvant être modifiées à distance (tilt électrique par exemple). La puissance émise par chaque antenne fait aussi partie des paramètres p.

Puis au cours d'une étape E20 on détermine un indicateur de performance IP(p, j) en fonction des paramètres p, en chacun des points j.

Dans l'exemple de réalisation décrit ici, on utilise un seul indicateur de performance, à savoir l'efficacité spectrale du réseau en ce point.

Au cours d'une étape E30, on estime ensuite un niveau de qualité locale QL(j,p) du réseau RC en chacun desdits points j, pour les paramètres p fixés à l'étape E10.

Conformément à l'invention, les niveaux de qualités locales QL(j,p) dépendent exclusivement des indicateurs de performance locale IP(j,p).

Dans l'exemple de réalisation décrit ici, ce niveau QL(j, p) est l'indicateur de performance locale IP(j,p), autrement dit l'efficacité spectrale du réseau en ce point j.

Puis, au cours d'une étape E40, on estime un niveau de qualité globale QGR(p) du réseau RC pour les paramètres p, à partir des niveaux de qualités locales QL(j,p) estimées à l'étape E30.

Au cours d'un test E50, on détermine si le niveau de qualité globale QGR(p) est supérieur à un niveau de qualité globale courant QGR, initialisé à zéro.

Si tel est le cas, on affecte, au cours d'une étape E60, on donne niveau de qualité globale courant QGR, le niveau de qualité globale QGR(p) calculé à l'étape E40.

Puis, au cours d'un test E70, on détermine si le niveau de qualité globale courant QGR peut être optimisé. Si c'est le cas, on retourne à l'étape E10 pour modifier les paramètres p, pour une nouvelle itération IT.

Lorsque le procédé d'optimisation ne converge plus, le résultat du test E70 devient négatif et on sauvegarde, par exemple dans la mémoire non volatile 15, les paramètres associés audit niveau de qualité globale optimal au cours d'une étape E80.

Ces paramètres peuvent ensuite être utilisés pour configurer le réseau RC.

La mémoire RAM 12 est agencée pour mémoriser les variables nécessaires à l'exécution du programme PG et notamment :
- les paramètres p ;
- les indicateurs de performances locales IP(j,p) ;
- les niveaux de qualités locales QL(j,p) ;
- le niveau de qualité globale QGR(p).

Dans le mode de réalisation décrit ci-dessus, on utilise un seul indicateur de performance, à savoir l'efficacité spectrale du réseau en ce point.

En variante, on peut par exemple utiliser un deuxième indicateur de performance constitué par l'estimation du débit aux points j du réseau.

Dans cette variante, le niveau de qualité locale QL(j,p) du réseau RC en chacun desdits points j, pour les paramètres p fixés à l'étape E10, peut être par exemple constitué par le produit de l'efficacité spectrale estimée en ce point par le débit estimé en ce point.

## Revendications

1. Procédé d'optimisation de la qualité d'un réseau cellulaire (RC) comportant au moins une itération (IT), chaque itération comportant :
- une étape (E20) d'estimation d'au moins un indicateur (IP(j,p)) de performance locale en une pluralité de points (j) du réseau (RC), en fonction de paramètres (p) du réseau ;
- une étape (E40) d'estimation d'un niveau de qualité globale (QGR(p)) du réseau (RC) pour lesdits paramètres (p), à partir de l'estimation (E30) d'un niveau de qualité locale (QL(j,p)) en chacun desdits points (j), pour lesdits paramètres (p), lesdits niveaux de qualités locales (QL(j,p)) dépendant exclusivement desdits indicateurs de performances locales (IP(j,p)) ;
- lesdits paramètres (p) étant modifiés (E10) tant que ledit niveau de qualité globale (QGR(p)) soit amélioré (E70) ; et
- une étape (E80) de mémorisation desdits paramètres (p) correspondant audit niveau de qualité globale optimal.

2. Procédé d'optimisation selon la revendication 1, **caractérisé en ce que** ledit indicateur (IP(j,p)) de performance locale en un point représente le débit ou l'efficacité spectrale en ce point.

3. Dispositif d'optimisation de la qualité d'un réseau cellulaire (RC) comportant, des moyens pour mettre en oeuvre, de façon itérative, tant qu'un niveau de qualité globale (QGR(p)) dudit réseau (RC), dépendant de paramètres (p) dudit réseau, peut être amélioré :
- des moyens pour modifier lesdits paramètres (p) ;
- des moyens d'estimation d'au moins un indicateur (IP(j,p)) de performance locale en une pluralité de points (j) du réseau (RC), en fonction de paramètres (p) du réseau ;
- des moyens d'estimation dudit niveau de qualité globale (QGR(p)) pour lesdits paramètres (p), à partir de l'estimation d'un niveau de qualité locale (QL(j,p)) en chacun desdits points (j), pour lesdits paramètres (p), lesdits niveaux de qualités locales (QL(j,p)) dépendant exclusivement desdits indicateurs de performances locales (IP(j,p)) ; et
- des moyens de mémorisation desdits paramètres (p) correspondant audit niveau de qualité globale optimal.

4. Programme d'ordinateur (PG) comportant des instructions pour l'exécution des étapes du procédé d'optimisation selon la revendication 1 ou 2 lorsque ledit programme est exécuté par un ordinateur.

5. Support d'enregistrement (13) lisible par un ordinateur sur lequel est enregistré un programme d'ordinateur (PG) comprenant des instructions pour l'exécution des étapes du procédé d'optimisation selon la revendication 1 ou 2.

## Patentansprüche

1. Verfahren zur Optimierung der Qualität eines zellularen Netzwerks (RC) mit mindestens einer Iteration (IT), wobei jede Iteration umfasst:
- einen Arbeitsschritt (E20) zur Schätzung mindestens eines Indikatoren (IP(j,p)) lokaler Leistung an einer Vielzahl von Stellen (j) des Netzwerks (RC) entsprechend Parametern (p) des Netzwerks,
- einen Arbeitsschritt (E40) zur Schätzung einer globalen Qualitätsstufe (QGR(p)) des Netzwerks (RC) für diese Parameter (p) anhand der Schätzung (E30) einer lokalen Qualitätsstufe (QL(j,p)) an jeder der genannten Stellen (j) für diese Parameter (p), wobei die lokalen Qualitätsstufen (QL(j,p)) ausschließlich von den genannten Indikatoren der lokalen Leistungen (IP(j,p)) abhängen,
- wobei die Parameter (p) geändert werden (E10), solange die globale Qualitätsstufe (QGR(p)) verbessert wird (E70), und
- einen Arbeitsschritt (E80) zur Speicherung der Parameter (p), die der optimalen, globalen Qualitätsstufe entsprechen.

2. Optimierungsverfahren nach Anspruch 1, **dadurch gekennzeichnet, dass** der genannte Indikator (IP(j,p)) lokaler Leistung an einer Stelle den Durchsatz bzw. die spektrale Effizienz an dieser Stelle darstellt.

3. Vorrichtung zur Optimierung der Qualität eines zellularen Netzwerks (RC), Mittel umfassend, solange eine von Parametern (p) des Netzwerks abhängige globale Qualitätsstufe (QGR(p)) des Netzwerks (RC) verbessert werden kann, zur Umsetzung auf iterative Weise von:
- Mitteln zur Änderung der genannten Parameter (p),
- Mitteln zur Schätzung mindestens eines Indikatoren (IP(j,p)) lokaler Leistung an einer Vielzahl von Stellen (j) des Netzwerks (RC) entsprechend Parametern (p) des Netzwerks,
- Mitteln zur Schätzung dieser globalen Qualitätsstufe (QGR(p)) für diese Parameter (p) anhand der Schätzung einer lokalen Qualitätsstufe (QL(j,p) an jeder der genannten Stellen (j) für diese Parameter (p), wobei die lokalen Qualitätsstufen (QL(j,p)) ausschließlich von den genannten Indikatoren lokaler Leistungen (IP(j,p)) abhängen, und
- Mitteln zur Speicherung der Parameter (p), die der optimalen, globalen Qualitätsstufe entsprechen.

4. Computerprogramm (PG), Befehle zur Ausführung der Arbeitsschritte des Optimierungsverfahrens nach Anspruch 1 oder 2 umfassend, wenn das genannte Programm durch einen Computer ausgeführt wird.

5. Aufzeichnungsträger (13), durch einen Computer lesbar, auf welchem ein Computerprogramm (PG) gespeichert ist, welches Befehle zur Ausführung der Arbeitsschritte des Optimierungsverfahrens nach Anspruch 1 oder 2 umfasst.

## Claims

1. A method of optimizing the quality of a cellular network (RC), comprising at least one iteration (IT), each iteration comprising:
- a step (E20) of estimating at least one local performance indicator (IP(j,p) at a plurality of points (j) of the network (RC), as a function of parameters (p) of the network;
- a step (E40) of estimating a global quality level (QGR(p)) of the network (RC) for said parameters (p) on the basis of a local quality level (QL(j,p)) as estimated (E30) at each of said points (j), for said parameters (p), said local quality level (QL(j,p)) depending exclusively on said local performance indicators (IP(j,p));
- said parameters (p) being modified (E10) so long as the global quality level (QGR(p)) is improved (E70); and
- a step (E80) of storing said parameters (p) corresponding to said optimum global quality level.

2. An optimization method according to claim 1, **characterized in that** said local performance indicator (IP(j,p)) at a point represents the data rate or the spectral efficiency at said point.

3. A device for optimizing the quality of a cellular network (RC), the device comprising means for implementing, in iterative manner so long as it is possible to improve a global quality level (QGR(p)) of said network (RC), that depends on parameters (p) of said network:
- means for modifying said parameters (p);
- means for estimating at least one local performance indicator (IP(j,p)) at a plurality of points (j) of the network (RC), as a function of parameters (p) of the network;
- means for estimating said global quality level (QGR(p)) for said parameters (p) on the basis of an estimate of a local quality level (QL(j,p)) at each of said points (j), for said parameters (p), said local quality levels (QL(j,p)) depending exclusively on said local performance indicators (IP(j,p)) ; and
- means for storing said parameters (p) corresponding to said optimum global quality level.

4. A computer program (PG) including instructions for executing the steps of the optimization method of claim 1 or 2 when said program is executed by a computer.

5. A computer readable recording medium (13) having recorded thereon a computer program (PG) including instructions for executing the steps of the optimization method according to claim 1 or 2.
